(19) Europäisches Patentamt
European Patent Office
Office européen des brevets

(11) **EP 3 203 558 B1**

(12) **EUROPEAN PATENT SPECIFICATION**

(45) Date of publication and mention
of the grant of the patent:
**20.02.2019 Bulletin 2019/08**

(21) Application number: **15846285.3**

(22) Date of filing: **01.10.2015**

(51) Int Cl.:
*H01M 4/62* (2006.01)    *H01G 11/38* (2013.01)
*H01M 10/0525* (2010.01)

(86) International application number:
**PCT/JP2015/077987**

(87) International publication number:
**WO 2016/052715 (07.04.2016 Gazette 2016/14)**

(54) **BINDER, USE THEREOF AND METHOD FOR PRODUCING ELECTRODE**

BINDEMITTEL, VERWENDUNG DAVON UND VERFAHREN ZUR HERSTELLUNG EINER ELEKTRODE

LIANT, SON UTILISATION ET PROCÉDÉ DE FABRICATION D'ÉLECTRODE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.10.2014 JP 2014205270**

(43) Date of publication of application:
**09.08.2017 Bulletin 2017/32**

(73) Proprietor: **The School Corporation Kansai University**
**Suita-shi, Osaka 564-8680 (JP)**

(72) Inventors:
• **YAMAGATA, Masaki**
  **Suita-shi**
  **Osaka 564-8680 (JP)**
• **ISHIKAWA, Masashi**
  **Suita-shi**
  **Osaka 564-8680 (JP)**
• **SOEDA, Kazunari**
  **Suita-shi**
  **Osaka 564-8680 (JP)**

(74) Representative: **Patentanwaltskanzlei WILHELM & BECK**
**Prinzenstraße 13**
**80639 München (DE)**

(56) References cited:
EP-A1- 2 541 651        WO-A1-2011/140150
JP-A- 2001 167 755      JP-A- 2011 192 644
JP-A- 2012 256 596      JP-A- 2013 058 365
JP-A- 2013 145 669      JP-A- 2014 026 777
JP-A- 2014 123 486      JP-A- 2015 125 972
US-A1- 2014 193 712

• VOYE GUENTHER ET AL: "Alginic acid extraction from algae", 19760101, vol. 85, 1 January 1976 (1976-01-01), XP001356675,

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a binder, use of the binder, and a method for producing an electrode.

Background Art

In recent years, there have been developed electrochemical devices (which encompass, for example, electricity storing devices such as an electrochemical capacitor and a lithium-ion secondary battery) which are provided in a mobile phone, an electric car, and the like. Among these, the lithium-ion secondary battery enables reduction in device size and weight and has a high charge-discharge efficiency and a high energy density, so that the lithium-ion secondary battery is used as an electric power source, for example, for a hybrid car and an electric car as well as for a portable device, a laptop PC, and a household electrical appliance. Further, combined with a natural energy system such as photovoltaic generation and wind power generation, the lithium-ion secondary battery is newly drawing attention for use as an electricity storing device for storing generated electrical power.

An electrode constituting the electrochemical device is constituted by: an active material which is directly involved in storage of electric energy; a conductive auxiliary agent which serves as a path for electrical conduction between active materials; a binder; and a current collector. A characteristic of the electrochemical device largely depends on the electrode, and is largely affected by a characteristic of each material constituting the electrode as well as by a combination of materials constituting the electrode.

Among the above constituents of the electrode, the binder is particularly expected to have such properties that (i) a ratio of the binder present in an electrode (hereinafter, referred to as "mix electrode") obtained from a mix containing an active material, a conductive auxiliary agent, and the binder is small, (ii) the binder has high affinity for an electrolyte supplied to the electrochemical device, and (iii) the binder allows minimizing an electric resistance of the electrode. Also, enough stability to resist a high voltage operation is an important property of the binder.

The binder is roughly classified into two types: an aqueous binder and a nonaqueous binder. Examples of the aqueous binder encompass a styrene-butadiene rubber (SBR) aqueous dispersion (Patent Literature 1 etc.) and carboxymethyl cellulose (CMC) (Patent Literatures 2 through 4 etc.). Further, combined use of these binders has also been proposed as a conventional technique (Patent Literatures 3, 5, and 6 etc.). Each of these aqueous binders has an advantage that relatively high adherence of the binder to an active material and a conductive auxiliary agent allows reducing a content of the binder in the mix.

Examples of the nonaqueous binder encompass polytetrafluoroethylene (PTFE) (Patent Literatures 7 and 8 etc.) and polyvinylidene fluoride (PVdF) (Patent Literatures 9 through 11 etc.), and these nonaqueous binders are particularly advantageous for use in a high-voltage operated device.

Meanwhile, sodium alginate is employed as a binder for use in a silicon-based anode mix for a lithium-ion secondary battery, and it is known that sodium alginate is usable as the binder and a lithium-ion secondary battery in which the binder is used has high cycle stability (Non-patent Literature 1).

Further, the inventors of the present invention have discovered that an alginic acid-based binder is applicable to an electrode for a capacitor (Patent Literature 12 and Non-patent Literature 2) and an anode for a lithium-ion battery (Patent Literature 12).

Further, it has been proposed to employ a chitosan derivative as a binder derived from a natural polymer, similarly as the alginic acid-based binder (Patent Literature 13). WO 2011/140150 A1 discloses the preparation of an anode for a lithium ion secondary battery comprising alginate as a binder; the use of alginic acid is contemplated as an alternative.

Citation List

[Patent Literature]

[Patent Literature 1
Japanese Patent No. 310775 (Publication date: October 23, 2000)
[Patent Literature 2]
Japanese Patent No. 3968771 (Publication date: August 29, 2007)
[Patent Literature 3]
Japanese Patent No. 4329169 (Publication date: September 9, 2009)

[Patent Literature 4]
Japanese Patent No. 4244041 (Publication date: March 25, 2009)
[Patent Literature 5]
Japanese Patent No. 3449679 (Publication date: September 22, 2003)
[Patent Literature 6]
Japanese Patent No. 3958781 (Publication date: August 15, 2007)
[Patent Literature 7]
Japanese Patent No. 3356021 (Publication date: December 9, 2002)
[Patent Literature 8]
Japanese Patent Application Publication, *Tokukaihei,* No. 07-326357 A (Publication date: December 12, 1995)
[Patent Literature 9]
Japanese Patent No. 3619711 (Publication date: February 16, 2005)
[Patent Literature 10]
Japanese Patent No. 3619870 (Publication date: February 16, 2005)
[Patent Literature 11]
Japanese Patent No. 3668579 (Publication date: July 6, 2005)
[Patent Literature 12]
Japanese Patent Application Publication *Tokukai* No. 2013-161832 (Publication date: August 19, 2013)
[Patent Literature 13]
Japanese Patent No. 5284896 (Publication date: September 11, 2013)

[Non-patent Literature]

[Non-patent Literature 1]
I. Kovalenko et al., Science, Vol. 75, pp. 75-79 (2011)
[Non-patent Literature 2]
M. Yamagata et al., RSC Advances, Vol. 3, pp. 1037-1040 (2013)

Summary of Invention

Technical Problem

However, the conventional binders described above have the following problem.

First, in a mix that employs SBR, which is an aqueous binder, an active material and a conductive auxiliary agent tend to be not uniform, and the lack of uniformity tends to result in low reproducibility of a performance of an electricity storing device. Also, CMC has a low adhesive force with respect to an active material and a conductive auxiliary agent, so that it is necessary to increase a content of CMC in an electrode to not less than 10 wt%. This, however, decreases a content rate of the active material.

In order to overcome these disadvantages, SBR and CMC need to be used together in order for an electricity storing device to be put to practical use. However, since SBR has a double bond in the main chain, a cathode that contains SBR will be deteriorated due to oxidation caused by charge and discharge of the device. Further, SBR and CMC expand when in contact with an electrolyte, and the expansion causes an active material to peel and fall off a current collector. As such, the electricity storing device in which SBR and CMC are used together tends to have problems such as deterioration in cycle endurance and output characteristic. Furthermore, the electricity storing device also has problems such as difficulty in managing slurry in a step of preparing a mix electrode.

Secondly, a fluorine-based polymer such as PTFE and PVdF, which are nonaqueous binders, has low affinity for an active material. As such, some active materials cause the fluorine-based polymer to be dispersed poorly so as to make it difficult to produce a highly uniform mix electrode. By increasing a ratio of the binder contained, it is possible to compensate for an insufficient adhesive force so as to ensure strength of an electrode. In this case, however, an electric resistance of the electrode is increased. This results in loss of an active site of activated carbon, which has a particularly large specific surface area. In addition, a content rate of the active material is decreased, so that a capacity of an electricity storing device is decreased. Furthermore, PTFE and PVdF have problems that (1) due to low affinity of PTFE and PVdF for a carbon material such as activated carbon, reproducibility of an electrode obtained is low and (2) a dispersing agent is necessary in order to allow PTFE and PVdF to be uniformly mixed with the carbon material.

As described above, the inventors of the present invention confirmed that in a case where an alkali metal salt or an alkaline earth metal salt (hereinafter, an alkali metal salt of alginic acid and an alkaline earth metal salt of alginic acid may be referred to as "alkali metal salts") of alginic acid is used as a binder constituting a mix electrode, the mix electrode is applicable to a cathode and an anode for an electrochemical device.

However, alginates as a binder cannot necessarily be applied effectively to all mix electrodes that employ an active material. That is, in a case where alginates are used as a binder, alginates are used in the form of an aqueous solution. As such, in a case where an active material has high reactivity with water (for example, in a case of using a layered oxide active material), there are problems such as a chemical change on a surface of the active material, elution of a transition metal in the active material, and a pH change during a process of preparing an electrode.

In a case where the active material thus deteriorates through a reaction with water, the electrochemical device has a decreased capacity and a deteriorated charge-discharge cycle characteristic, and also loses heat resistance. This problem is inevitable in the use of every aqueous binder, including the use of a conventional alginic acid-based binder.

Recently, research has been conducted on the use of an active material (for example, a layered metal oxide active material) having high reactivity with water in order to prepare an electrochemical device which is excellent in capacity and charge-discharge cycle characteristic. In the field of electrochemical devices, there is a great demand for development of a binder that allows solving the problem above.

The present invention is accomplished in view of the foregoing problems. An object of the present invention is to provide an aqueous binder which (i) allows suppressing deterioration of an active material having high reactivity with water so as to enable the use of the active material, (ii) allows ensuring high strength of an electrode with a small amount of the aqueous binder used, and (iii) allows achieving a high output characteristic and the like of the electrode.

Solution to Problem

As a result of making diligent study to attain the object, the inventors of the present invention found that the object is attainable by using a binder containing a proton in a system thereof, for example, a binder such as alginic acid (which may hereinafter be referred to as "Alg-H") which contains, as a main component, a compound whose molecule contains a polar functional group having a proton. Based on the finding, the inventors have completed the present invention. That is, the present invention encompasses the subject matter disclosed in the claims

Advantageous Effects of Invention

A binder in accordance with the present invention (i) allows suppressing deterioration of an active material caused by a reaction between the active material and water, even in a case where the active material used has high reactivity with water, (ii) allows ensuring high strength of an electrode with a small amount of the binder used, and (iii) has high affinity for an electrolyte and the like. Accordingly, the binder allows providing an electrochemical device which has high performance and a high level of safety.

Brief Description of Drawings

Fig. 1 is a view schematically illustrating positions at which a thickness of an electrode is measured in evaluation of a structural change in the electrode in an Example.

Fig. 2 is a graph showing results obtained by carrying out measurement of constant current charge and discharge with respect to a two-electrode half-cell for evaluation which employed an electrode in accordance with the present invention for an electrochemical device.

Fig. 3 is a graph showing results obtained by carrying out measurement of constant current charge and discharge with respect to (i) a two-electrode half-cell for evaluation which employing the electrode in accordance with the present invention for an electrochemical device and (ii) two-electrode half-cells for evaluation each employing a conventional electrode.

Fig. 4 is a graph showing results obtained by measuring an output characteristic with respect to (i) a two-electrode half-cell for evaluation employing the electrode in accordance with the present invention for an electrochemical device and (ii) two-electrode half-cells for evaluation each employing a conventional electrode.

Fig. 5 is a graph showing results obtained by carrying out measurement of constant current charge and discharge with respect to a prototype cell employing the electrode in accordance with the present invention for an electrochemical device.

Fig. 6 is a graph showing results obtained by carrying out, over a long period, measurement of constant current charge and discharge with respect to a prototype cell employing the electrode in accordance with the present invention for an electrochemical device.

Fig. 7 is a graph showing results obtained by carrying out, at a high voltage, measurement of constant current charge and discharge with respect to a prototype cell employing the electrode in accordance with the present invention for an electrochemical device.

Fig. 8 is a graph showing results obtained by measuring an output characteristic with respect to (i) a prototype cell employing the electrode in accordance with the present invention for an electrochemical device and (ii) a prototype cell employing a conventional electrode.

Fig. 9 is a view showing results of a charge and discharge test with respect to a two-electrode half-cell for evaluation employing an electrode in which chitosan is mixed with acetic acid in Example 3.

Description of Embodiments

The present invention will be described in detail below. The scope of the present invention is not bound by the descriptions that follow.

In the Description, any numerical range expressed as "A to B" means "not less than A and not greater than B" unless otherwise stated. Further, the terms "mass" and "weight" are synonymous with each other, and the terms "mass%" and "wt%" are synonymous with each other.

[1. Binder]

A binder in accordance with the present invention is a binder (a binder which binds an active material and a conductive auxiliary agent to each other) which binds an active material (which may hereinafter be referred to as "electrode active material" or simply "active material") and a conductive auxiliary agent, which are materials for an electrode for an electrochemical device, to each other. The binder contains a proton in a system thereof.

As is already known, alginate and the like, which are aqueous binders, are applicable to, for example, an anode for a lithium-ion secondary battery. In a case where alginate or the like is used as a binder, it is necessary to use an aqueous solution in preparation of an electrode. This results in a problem that, in a case where the active material is a substance having high reactivity with water, the substance reacts with water to become alkaline and deteriorated.

In the Description, "an active material having high reactivity with water" refers to an electrode active material that reacts with water when in contact with the water so as to undergo a partial or total change in structure, chemical state, and/or composition, i.e., an electrode active material that reacts with water and is deteriorated due to a change in structure and an elution of a component of the active material while the water undergoes alkalization. Hereinafter, the active material may be referred to as "water-reactive active material."

Meanwhile, the binder in accordance with the present invention contains a proton in a system thereof or contains, as a main component, a compound having a polar functional group having a proton, so that the binder releases the proton in the presence of water so as to enable neutralization of alkaline by the proton. This allows suppressing an increase in pH of a mix containing the active material, the conductive auxiliary agent, and the binder during preparation of the electrode, and accordingly allows preparing an electrode while suppressing deterioration of the active material.

Accordingly, it becomes possible to use a cathode active material that is chemically unstable with respect to water, while minimizing an amount of the binder used.

Further, the binder in accordance with the present invention has high affinity for the active material and the conductive auxiliary agent. Accordingly, the binder allows obtaining a mix electrode that is more uniform than a mix electrode prepared with use of a conventional binder. Further, the binder in accordance with the present invention has a sufficient adhesive force, and accordingly facilitates preparation of an electrode.

Further, the binder in accordance with the present invention allows the electrode to have a level of strength required in an industrial process of preparing an electrode, as described later in the Examples.

Further, the binder in accordance with the present invention has high affinity for the active material, an electrolyte, and a current collector. Accordingly, the binder enables a significant improvement in (i) cycle characteristics of an electrode which employs the electrode active material and (ii) capacity exhibited by an electrochemical device, as described later in the Examples. In addition, due to having high affinity for the active material and the conductive auxiliary agent, the binder in accordance with the present invention enables a reduction in interfacial resistance between materials in the electrode of the electrochemical device. Further, the binder in accordance with the present invention allows achieving good charge-discharge characteristics at a high voltage and a high electric potential.

Accordingly, even in a case where the water-reactive active material is used, it is possible to achieve a high energy density and a high output of an electrochemical device such as a lithium-ion battery.

As described above, the binder in accordance with the present invention allows deterioration of the water-reactive active material caused by water to be suppressed by a proton. Accordingly, despite being an aqueous binder, the binder in accordance with the present invention allows providing an electrochemical device having excellent characteristics, with use of a water-reactive active material.

Conventionally, there have been a large number of binders that are used in preparation of a mix electrode for an electricity storing device. However, there has been found no binder that both (i) provides satisfactory degrees of characteristics in the requirements of adhesion, dispersibility, electrochemical stability, low cost, strength, and ease in handling and (ii) allows increasing an output of the device. Furthermore, it is a significantly remarkable effect beyond expectations of a person skilled in the art that the binder provides these characteristics when used in a cathode, which is exposed in an atmosphere with a high electric potential.

<Binder>

The binder in accordance with the present invention binds together an active material, a conductive auxiliary agent, a current collector, and the like which are materials for an electrode for an electrochemical device. The binder is present so as to cover the electrode active material and the conductive auxiliary agent or bind the electrode active material and the conductive auxiliary agent to each other, and fixes the conductive auxiliary agent to the electrode active material. The electrode may be a cathode or an anode.

As described above, the binder in accordance with the present invention allows suppressing, by means of neutralization of alkaline by a proton, alkalization of a water-reactive active material caused by a reaction between the water-reactive active material and water. It is accordingly assumed that the binder in accordance with the present invention is able to suppress deterioration of the water-reactive active material, if the binder contains a proton in a system thereof or contains, as a main component, a compound capable of the neutralization.

In view of this, the binder in accordance with the present invention contains a proton in a system thereof. Alternatively, the binder in accordance with the present invention contains, as a main component, a compound having a polar functional group having a proton.

In the present invention, a binder "having a proton in a system" can mean (i) a binder (hereinafter referred to as "binder A") which in itself has a proton or (ii) a binder (hereinafter referred to as "binder B") which has come to have a proton by containing (a) a binder having no proton and (b) an acid. That is, the binder B refers to a binder which as no proton and is not acidic but which is mixed with an acid so that a system including the binder and the acid has come to have a proton. The binder in accordance with the present invention can encompass a binder which utilizes the binder A and the binder B together.

Each of the binder A and the binder B, when present in water, causes the water to have a pH of less than 7. The binder B can be prepared by appropriately mixing an acid and a binder that has no proton. The acid is not limited to a specific type. Since the binder in accordance with the present invention has a proton in a system thereof, slurry (described later) for an electrode is also acidic (has a pH of less than 7).

Examples of the binder B encompass a binder obtained by mixing (i) a binder having no proton, such as a metal salt of alginic acid, a metal salt of carboxymethyl cellulose, chitosan, and a polar functional group adduct of other polysaccharides or a metal salt thereof and (ii) an acid such as bis(fluorosulfonyl)imidic acid, formic acid, acetic acid, and the like. Note that the binder having no proton may be one compound or a mixture of two or more compounds. Similarly, the acid may be one acid or a mixture of two or more acids. Since deterioration of a water-reactive active material can be prevented as long as a proton is included in the system, a mixture ratio of the acid and the binder having no proton is not particularly limited.

Examples of the binder A encompass a binder containing, as a main component, a compound having a polar functional group having a proton.

The polar functional group having a proton is not particularly limited, but examples of the polar functional group encompass one or two functional groups selected from the group consisting of a carboxyl group, a carbonyl group, a phosphate group, a sulfonyl group, a nitro group, a nitric acid group, a nitrous acid group, and a hydroxyl group.

The compound having the functional group above may be any compound, provided that a liquid (slurry) obtained by mixing the compound, water, an active material, and other electrode materials has a pH of less than 7. The liquid may be an aqueous solution or a suspension.

The compound having the functional group is not particularly limited, but examples of the compound encompass (i) alginic acid, hyaluronic acid, carboxylic acid vinyl, vinyl sulfonic acid, pectin, polylactic acid, Nafion (registered trademark), and the like or (ii) a copolymer with a monomer having a polar functional group having a proton, such as a styrene-sulfonic acid copolymer and a styrene-maleic acid copolymer; a polar functional group adduct having a proton; and the like. The compound having the functional group may be used alone, or in the form of a mixture of two or more of the compound.

The term "contain a compound as a main component" means that a content rate of the compound in the binder is more than 50 wt% and not more than 100 wt%, relative to a total weight 100 wt% of the binder. The content rate is most preferably not less than 70 wt% and not more than 100 wt%, not less than 75 wt% and not more than 100 wt%, not less than 80 wt% and not more than 100 wt%, not less than 85 wt% and not more than 100 wt%, or not less than 90 wt% and not more than 100 wt%.

It is not preferable that the content rate be not more than 50 wt%, since such a content rate invites a decrease in output of the device. Note that in a case where the compound having a functional group having a proton is used in the form of a mixture of two or more of the compound, the content rate means a total of content rates of respective compounds each having the functional group.

In a case where the content rate of the compound in the binder is less than 100 wt%, examples of a component of the binder other than the compound encompass: polyvinylidene fluoride (PVdF); a PVdF copolymer resin such as a copolymer of PVdF and hexafluoropropylene (HFP) and a copolymer of perfluoromethyl vinyl ether (PFMV) and tetrafluoroethylene (TFE); a fluorine-based resin such as polytetrafluoroethylene (PTFE) and a fluorine-containing rubber; a polymer such as a styrene-butadiene rubber (SBR), an ethylene-propylene rubber (EPDM), or a styrene-acrylonitrile copolymer; a polysaccharide such as carboxymethyl cellulose (CMC); a protein such as gelatin; a derivative thereof; and a mixture containing one or more thereof.

The compound having the polar functional group having a proton may or may not be crosslinked, as long as the compound is able to have a structure that can release the proton.

<Alginic acid (Alg-H)>

The compound having the polar functional group having a proton is more preferably alginic acid (which may be hereinafter referred to as "Alg-H"). Alg-H refers to alginic acid in which O-H of a carboxyl group remains as it is, i.e., alginic acid in which a carbonyl group is not bound to a cation other than a proton. That is, Alg-H can be regarded as alginic acid in acidic form.

Alginic acid has a basic molecular structure of a polymer polysaccharide which is obtained by 1,4 bonding between $\beta$-D-mannuronic acid and $\alpha$-L-guluronic acid. Note that alginic acid is generally derived from plants belonging to the Phaeophyceae, such as kelp, *Undaria pinnatifida,* and *Ecklonia cava.*

It is known to a person skilled in the art that the term "alginic acid" may be used as a general term for (i) alginic acid and (ii) alginate which is a salt with an element other than a proton. In the Description, however, the term "alginic acid" refers to "Alg-H" described above. That is, the binder in accordance with the present invention preferably contains alginic acid (Alg-H) as a main component, but since it is necessary that the binder be capable of releasing a proton in the presence of water so as to neutralize an alkaline generated through a reaction between an active material and the water, the binder does not contain, as a main component, alginate such as sodium alginate, calcium alginate, and magnesium alginate, as described above.

In addition to thus being capable of sufficiently suppressing degradation of a water-reactive active material, Alg-H allows providing an environmentally-friendly binder at a reduced production cost, because of being a natural polymer.

A method for producing Alg-H is not particularly limited, and Alg-H can be produced in accordance with a conventionally known method, for example, in such a manner that the pH of an aqueous solution of sodium alginate derived by a conventionally known method from plants belonging to the Phaeophyceae is lowered by adding an acid to the aqueous solution, so that water-insoluble Alg-H is precipitated. Also, it is possible to use commercially available Alg-H such as product No. A17582 produced by Wako Pure Chemical Industries, Ltd. and product No. A7003 produced by Sigma-Aldrich.

Alg-H may or may not be crosslinked, as long as Alg-H is able to have a structure that can release a proton. Crosslinked Alg-H can be, for example, a crosslinked product which is obtained by crosslinking Alg-H with an alkaline earth metal ion, a transition metal ion, a primary amine, diol, or the like.

<Active material>

An active material used in the present invention is not particularly limited, and may be a water-reactive active material, a water-nonreactive active material, or a weakly water-reactive active material.

The active material is not particularly limited, but examples of the active material encompass an active material into or from which a cation such as lithium, sodium, and magnesium can be easily inserted or detached. Specific examples of the active material encompass transition metal oxides such as $CuO$, $Cu_2O$, $MnO_2$, $MoO_3$, $V_2O_5$, $CrO_3$, $MoO_3$, $Fe_2O_3$, $Ni_2O_3$, and $CoO_3$; lithium complex oxides containing lithium and a transition metal, such as $Li_xCoO_2$, $LixNiO_2$, $LixMn_2O_4$, $LiNi_{1/3}Mn_{1/3}Co_{1/3}O_2$ (NMC), and $LiFePO_4$; metal chalcogenates such as $TiS_2$, $MoS_2$, and $NbSe_3$; conductive polymer compounds such as polyacene, polyparaphenylene, polypyrrole, and polyaniline; and the like.

The transition metal oxides or the complex oxides can be (i) one which is doped with a small amount of an element such as fluorine, boron, aluminum, chromium, zirconium, molybdenum, and iron or (ii) one which is obtained by treating a surface of particles of the complex oxide with carbon, $MgO$, $Al_2O_3$, $SiO_2$ or the like.

Many of the transition metal oxides or the complex oxides have high reactivity with water as described above, and thus have problems such as deterioration due to (i) a chemical change of a surface of an active material caused by a reaction with water, (ii) elution of a transition metal, or (iii) a change in pH during a process of preparing an electrode.

These problems can be solved by the binder in accordance with the present invention.

The active material described above may be used alone, or two or more of the active material may be used in combination. Further, the active material may be used as a cathode active material or an anode active material.

<Current collector>

As a current collector, it is possible to use an electronic conductor which does not have an adverse effect on a battery constituted by the current collector. Examples of such a current collector encompass aluminum, titanium, stainless steel, nickel, baked carbon, a conductive polymer, conductive glass, and the like. For improvement of adhesion, conductivity, oxidation resistance, and the like, the current collector may be one which is obtained by treating a surface of aluminum or the like with carbon, nickel, titanium, silver, or the like.

A surface of the current collector may be subjected to an oxidation treatment. The current collector may be in the form of a molded article such as a foil, a film, a sheet, a net, a punched or expanded object, a lath body, a porous body, and a foam. A thickness of the current collector is not particularly limited, but generally not smaller than 1 $\mu$m and not greater than 100 $\mu$m.

The binder in accordance with the present invention is excellent in adhesion, and accordingly allows a mix containing the binder, an active material, and a conductive auxiliary agent to be bonded to the current collector.

<Conductive auxiliary agent>

The conductive auxiliary agent may be any electron-conductive material that does not have an adverse effect on a performance of a battery. The conductive auxiliary agent is generally carbon black such as acetylene black and Ketjenblack, but may be a conductive material such as natural graphite (flake graphite, scale-like graphite, earthy graphite, and the like), artificial graphite, carbon whisker, carbon fiber powder, metal (copper, nickel, aluminum, silver, gold, and the like) powder, a metal fiber, a conductive ceramic material, and the like. These materials may be used alone, or in the form of a mixture of two or more of the materials.

[2. Electrode for electrochemical device, method for producing electrode, slurry for electrode, and mix for electrode]

<Electrode for electrochemical device>

An electrode in accordance with the present invention for an electrochemical device is characterized by containing a binder in accordance with the present invention. Apart from the binder, the electrode only needs to contain the active material, the current collector, and the conductive auxiliary agent which are described above.

A content rate of the binder in the electrode in accordance with the present invention for an electrochemical device is preferably not less than 1 wt% and not more than 10 wt% and more preferably not less than 2 wt% and not more than 3 wt%, relative to total 100 wt% of the active material, the conductive auxiliary agent, and the binder in terms of dry weight.

The term "dry weight" refers, for example, to a weight of slurry, containing the active material, the conductive auxiliary agent, and the binder, for an electrode after the slurry is applied to the current collector and dried. A method for the drying will be described later in <Slurry for electrode, mix for electrode, and method for producing electrode for electrochemical device>.

A content rate of the binder of not less than 1 wt% is preferable because such a content rate allows facilitating preparation of a mix in which the active material, the conductive auxiliary agent, and the binder are uniformly mixed. A content rate of the binder of not less than 10 wt% is preferable because such a content rate allows preventing an increase in content rate of the active material in accordance with an increase in content rate of the binder.

Due to containing the binder in accordance with the present invention, the electrode in accordance with the present invention for an electrochemical device is able to have, as described later in the Examples, strength equivalent to or greater than that of an electrode employing a conventional binder such as PVdF, even if a content rate of the binder in accordance with the present invention in the mix is lower than that of the conventional binder. Further, due to employing the binder in accordance with the present invention, the electrode in accordance with the present invention for an electrochemical device has excellent uniformity, a reduced electric resistance, and, as described later in the Examples, an ability to operate at a high voltage of 3.0 V to 4.5 V.

The electrode in accordance with the present invention for an electrochemical device may be used as a cathode or an anode of the electrochemical device. Even in a case where the active material is a water-reactive active material, using the active material in combination with the binder in accordance with the present invention allows the electrode to serve sufficiently as a cathode and an anode to which a wide range of electric potentials are applied.

<Methods for producing slurry for electrode, mix for electrode, and electrode for electrochemical device>

Slurry in accordance with the present invention for an electrode contains the binder in accordance with the present invention, a conductive auxiliary agent, an active material, and water. A mix for an electrode can be obtained by applying the slurry in accordance with the present invention for an electrode onto a current collector and drying the slurry. That is, by applying the slurry in accordance with the present invention for an electrode onto the current collector and drying the slurry, it is possible to produce the electrode in accordance with the present invention for an electrochemical device in which electrode the mix for an electrode is provided on the current collector.

Specifically, a method for producing the electrode in accordance with the present invention for an electrochemical device is a method including a step A of mixing (i) the binder in accordance with the present invention and (ii) an active material and a conductive auxiliary agent which are materials for the electrode for an electrochemical device, so as to obtain a mixture and a step B of mixing the mixture and water to obtain slurry for an electrode which slurry has a solid content concentration of 20 wt% to 75 wt%.

A solid content concentration of the slurry in accordance with the present invention for an electrode varies depending on content of the slurry for an electrode, and therefore is not particularly limited. However, the solid content concentration is, for example, preferably 20 wt% to 75 wt% and more preferably 60 wt%.

A content rate (wt%) of the active material, the conductive auxiliary agent, and the binder in a solid content of the slurry for an electrode is preferably the active material : the conductive auxiliary agent : the binder = 80 to 99 : 0 to 20 : 1 to 10 and more preferably 90 to 99 : 0 to 10 : 1 to 3, relative to 100 wt% of a weight of a solid content of the slurry for an electrode.

The slurry in accordance with the present invention for an electrode can be prepared by mixing the binder in accordance with the present invention with an active material, a conductive auxiliary agent, and water, which are materials for the electrode for an electrochemical device. A specific method for producing the slurry is not particularly limited.

For example, the slurry in accordance with the present invention for an electrode can be produced by a method including a step A of mixing the binder in accordance with the present invention, the active material, and the conductive auxiliary agent to obtain a mixture and a step B of mixing the mixture and water so as to achieve a solid content concentration of 20 wt% to 75 wt% to obtain the slurry in accordance with the present invention for an electrode. Note that the solid content concentration in the slurry is not limited to the above concentration of 20 wt% to 75 wt%.

As described above, the binder in accordance with the present invention contains, as a main component, a compound, such as Alg-H, which has a polar functional group having a proton. This compound is a water-insoluble solid. In a case of a binder which contains, for example, alginate as a main component, slurry for an electrode can be prepared by preparing an aqueous solution of alginate and mixing the aqueous solution, an active material, and a conductive auxiliary agent. The use of the aqueous solution facilitates the mixing. In a case of the compound such as Alg-H, however, the above preparation method cannot be conducted, since the compound is water-insoluble.

Even in this case, slurry for an electrode can easily be prepared by employing a method, such as the method including the steps A and B, in which a mixture of a binder, an active material, and a conductive auxiliary agent is first prepared and then the mixture is mixed with water. As a matter of course, in a case of a water-soluble binder, slurry for an electrode may be prepared by preparing an aqueous solution of the binder and mixing the aqueous solution, an active material, and a conductive auxiliary agent, as in the case of alginate described above.

Mixture of components of slurry for an electrode (for example, a step of pulverizing and mixing the binder of the present invention, an active material, and a conductive auxiliary agent to obtain a mixture, a step of mixing the mixture and water to obtain slurry for an electrode, etc.) may be performed by use of a conventionally known mortar; high-speed pulverizer such as a roll mil, a hammer mill, a screw mil, and a pin mil; vibrating mill; roll granulator; knuckle-type pulverizer; cylindrical mixer; and the like.

By applying the slurry for an electrode onto a current collector and drying the slurry, it is possible to form a mix for an electrode on the current collector, so that an electrode for an electrochemical device is successfully produced. Examples of a method for applying the slurry encompass known application methods such as a method of applying the slurry for an electrode onto a current collector and removing excessive slurry for an electrode by a doctor blade and a method of applying the slurry for an electrode onto a current collector and rolling the slurry for an electrode by use of a roller.

A temperature at which the applied slurry for an electrode is dried is not particularly limited, and may vary as appropriate in accordance with a compounding ratio of materials in the slurry for an electrode. For example, it is possible to employ a method in which a current collector onto which the slurry for an electrode is applied is allowed to stand at room temperature, subsequently heated at 50°C to 100°C by use of a heating device so as to be dried by removal of moisture, and then further dried under reduced pressure at 120°C for several hours. In this case, a depressurization condition is a pressure of not more than 10 Pa. A thickness of an electrode obtained may vary as appropriate depending on intended use of an electrochemical device.

[3. Electrochemical device]

An electrochemical device in accordance with the present invention includes a cathode and an anode, and contains an electrolyte between the cathode and the anode. The cathode and/or the anode is(are) the electrode in accordance with the present invention for an electrochemical device. Further, the electrochemical device includes a separator which is provided between the cathode and the anode in order to prevent a short circuit from occurring between the cathode and the anode. Each of the cathode and the anode is provided with a current collector, and the current collectors of the cathode and the anode are connected to an electric power source. The electric power source is operated so as to switch between charging and discharging. Note that matters already discussed in [2. Electrode for electrochemical device, method for producing electrode, slurry for electrode and mix for electrode] will be omitted in the following description.

The binder in accordance with the present invention has high affinity for materials constituting an electrode, and accordingly is applicable to not only a lithium-ion battery but also various electrochemical devices.

Examples of the electrochemical device in accordance with the present invention encompass an electrochemical capacitor, a lithium-ion secondary battery, and the like, and further encompass a non-lithium-ion battery, a lithium ion capacitor, a dye-sensitized solar cell, and the like. The electrochemical device can be used as a high-performance and highly safe electricity storing device. Accordingly, the electrochemical device in accordance with the present invention may be included in a small electronic device such as a mobile phone, laptop PC, a portable digital assistant (PDA), a video camera, and a digital camera; equipment (vehicle) for movement such as an electric bicycle, an electric car, and a train; equipment for power generation such as thermal power generation, wind power generation, hydraulic power generation, nuclear power generation, and geothermal power generation; a natural energy storage system; and the like.

In particular, the electrochemical device is more preferably a lithium-ion secondary battery. For example, a metal oxide having a layered structure, such as NMC, has a great potential to be utilized as an electrode material for a lithium-ion secondary battery, due to having high capacity and excellent heat stability. However, such a metal oxide also has a disadvantage of having high reactivity with water. The electrode in accordance with the present invention for an electrochemical device, due to containing the binder in accordance with the present invention, enables suppression of deterioration of the metal oxide caused by water.

Therefore, the present invention has an advantage of allowing making sufficient use of excellent characteristics of a metal oxide which has a layered structure and is useful as an electrode material for a lithium-ion secondary battery.

<Electrolyte>

An electrolyte can be a known electrolyte and is not particularly limited, but it is possible to use a nonaqueous electrolyte. The nonaqueous electrolyte can be a nonaqueous electrolyte used in a conventionally known electrochemical device, and may be an ionic liquid.

The nonaqueous electrolyte may be an organic electrolyte used as a nonaqueous electrolyte in an electrochemical device. This organic electrolyte contains an electrolyte salt serving as an ion carrier, and is constituted by an organic solvent which dissolves the electrolyte salt. That is, the organic electrolyte contains the electrolyte salt and the organic solvent.

The electrolyte salt may be one or more substances selected from the ionic liquid, a quaternary onium salt, an alkali metal salt, an alkaline earth metal salt, and the like.

Typical examples of the quaternary onium salt encompass a tetraalkylammonium salt, a tetraalkylphosphonium salt, and the like.

Typical examples of the alkali metal salt and the alkaline earth metal salt encompass a lithium salt, a sodium salt, a potassium salt, a magnesium salt, a calcium salt, and the like.

Examples of an anion of the electrolyte salt encompass $BF_4^-$, $NO_3^-$, $PF_6^-$, $SbF_6^-$, $CH_3CH_2OSO_3^-$, $CH_3CO_2^-$; or a fluoroalkyl group-containing anion such as $CF_3CO_2^-$, $CF_3SO_3^-$, $(CF_3SO_2)_2N$-[bis(trifluoromethylsulfonyl)imide], $(CF_3SO_2)_3C^-$, and the like.

Examples of an electrolyte salt in a lithium-ion secondary battery in particular encompass lithium salts such as $LiClO_4$, $LiAsF_6$, $LiPF_6$, $LiPF_4$, $LiBF_4$, $LiB(C_6H_5)_4$, $LiCl$, $LiBr$, $CH_3SO_3Li$, $CF_3SO_3Li$, and the like.

Examples of the organic solvent encompass ethers, ketons, lactones, nitriles, amines, amides, a sulfur compound, chlorinated hydrocarbons, esters, carbonates, a nitro compound, a phosphate ester-based compound, a sulfolane-based compound, and the like.

Typical examples of the organic solvent encompass tetrahydrofran, 2-methyltetrahydrofran, 1,4-dioxane, anisole, monoglyme, acetonitrile, propionitrile, 4-methyl-2-pentanone, butyronitrile, valeronitrile, benzonitrile, 1,2-dichloroethane, $\gamma$-butyrolactone, dimethoxyethane, methyl formate, propylene carbonate, ethylene carbonate, dimethylcarbonate , dimethylformamide, dimethylsulfoxide, dimethylthioformamide, sulfolane, 3-methyl-sulfolane, trimethyl phosphate, triethyl phosphate, a mixed solvent thereof, and the like.

Among these examples, propylene carbonate is preferable for having low viscosity, good ion conductivity, and good electrochemical stability. The nonaqueous electrolyte can employ one of the examples or a combination of two or more of the examples.

The nonaqueous electrolyte may be an ionic liquid-based electrolyte used as a nonaqueous electrolyte for an electrochemical device. Note that "ionic liquid" herein refers to a salt which exists in a form of liquid even at room temperature. Examples of a cation of the ionic liquid encompass imidazolium, pyridinium, pyrrolidinium, piperidinium, tetraalkylammonium, pyrazolium, tetraalkylphosphonium, and the like.

Examples of imidazolium encompass 1-ethyl-3-methylimidazolium, 1-butyl-3-methylimidazolium, 1-ethyl-2,3-dimethylimidazolium, 1-allyl-3-methylimidazolium, 1-allyl-3-ethylimidazolium, 1-allyl-3-butylimidazolium, 1,3-diallylimidazolium, and the like.

Examples of pyridinium encompass 1-propylpyridinium, 1-butylpyridinium, 1-ethyl-3-(hydroxymethyl)pyridinium, 1-ethyl-3-methylpyridinium, and the like.

Examples of pyrrolidinium encompass N-methyl-N-propylpyrrolidinium, N-methyl-N-butylpyrrolidinium, N-methyl-N-methoxymethylpyrrolidinium, and the like.

Examples of piperidinium encompass N-methyl-N-propylpiperidinium and the like.

Examples of tetraalkylammonium encompass N,N,N-trimethyl-N-propylammonium, methyltrioctylammonium, and the like.

Examples of pyrazolium encompass 1-ethyl-2,3,5-trimethylpyrazolium, 1-propyl-2,3,5-trimethylpyrazolium, 1-butyl-2,3,5-trimethylpyrazolium, and the like.

Examples of an anion which is combined with the cation to constitute the ionic liquid encompass $BF_4^-$, $NO_3^-$, $PF_6^-$, $SbF_6^-$, $CH_3CH_2OSO_3^-$, $CH_3CO_2^-$; or a fluoroalkyl group-containing anion such as $CF_3CO_2^-$, $CF_3SO_3^-$, $(CF_3SO_2)_2N^-$ [bis(trifluoromethylsulfonyl)imide], $(FSO_2)_2N^-$[bis(fluorosulfonyl)imide], and $(CF_3SO_2)_3C^-$.

As the ionic liquid, it is possible to employ an ionic liquid in which at least one of the anions above and at least one of the cations above are combined. In a case where the electrochemical device is a lithium-ion secondary battery, an ionic liquid containing an anion such as $(FSO_2)_2N^-$ is preferable. These ionic liquids are preferable for (1) enabling both an improvement in electrical characteristics of the electricity storing device and suppression of degradation of the electrical characteristics and (2) being easily available and enabling further suppression of degradation of electrical characteristics of an electrolyte in the electricity storing device.

Also in terms of ease in handling in the atmosphere, an ionic liquid containing a fluorine-based anion such as $(FSO_2)_2N^-$ is preferable in the lithium-ion secondary battery.

Further, the ionic liquid is preferably an ionic liquid that contains an imidazolium cation or an pyrrolidinium cation, for having relatively low viscosity, good ion conductivity, and good electrochemical stability.

Specifically, the ionic liquid is preferably a salt with an anion that is bis(fluorosulfonyl)imide anion and a cation that is quaternary ammonium such as pyrrolidinium. More specifically, N,N-dialkylpyrrolidinium bis(fluorosulfonyl)imide is preferable. Tetraalkylammonium bis(fluorosulfonyl)imide and 1-ethyl-3-methylimidazolium bis(fluorosulfonyl)imide are also encompassed in the examples of a preferable nonaqueous electrolyte.

Further, in the lithium-ion secondary battery, it is possible to use a known polymer electrolyte such as polyethylene oxide, polyacrylonitrile, polymethyl methacrylate, and the like.

<Separator>

The electrochemical device of the present invention includes a separator which is provided between a cathode and an anode in order to prevent a short circuit from occurring between the cathode and the anode. The separator can be a known separator and is not particularly limited, but specific examples of the separator encompass a microporous polyethylene or polypropylene film; a multilayer film constituted by a porous polyethylene film and polypropylene; and a nonwoven fabric made of polyester fibers, aramid fibers, glass fibers, or the like. More preferably, the separator is a separator which is obtained by causing microparticles of ceramics such as silica, alumina, and titania to adhere to a surface of the microporous film, the multilayer film, or the nonwoven fabric.

The separator has a porosity of preferably not less than 70%, more preferably not less than 80%, and even more preferably not less than 95%. The separator has a permeability of preferably not more than 200 sec/ 100 cc as determined by the Gurley method.

Note that porosity is a value obtained by the following formula on the basis of an apparent density of the separator and a true density of the solid content of the material of the separator.

$$\text{Porosity (\%)} = 100 - (\text{apparent density of the separator}$$

$$/ \text{ true density of the solid content of the material}) \times 100$$

Gurley permeability is permeation resistance determined by the Gurley test and defined by JIS P 8117.

As the separator, particularly preferable is a sheet which is made by a wet paper-making method and contains not less than 80 wt% of glass fibers having a mean fiber diameter of not greater than 1 pm and less than 20 wt% of an organic component including fibrillated organic fibers, and in which the glass fibers are bound to each other by being tangled by the fibrillated organic fibers so as to achieve a porosity of not less than 85%.

The fibrillated organic fibers are fibers having a large number of fibrils which are obtained in such a manner that a single fiber receives a shearing force through, for example, being beaten with use of a device (e.g. double disc refiner) for ablating fibers, so that the single fiber is split very finely along an axis of the single fiber. It is preferable that at least 50 wt% of the fibrillated organic fibers are fibrillated to have a fiber diameter of not greater than 1 pm, and it is more preferable that 100 wt% of the fibrillated organic fibers are fibrillated to have a fiber diameter of not greater than 1 pm.

Examples of the fibrillated organic fibers encompass polyethylene fibers, polypropylene fibers, polyamide fibers, cellulose fibers, rayon fibers, acrylic fibers, and the like.

The present invention is not limited to the embodiments, but can be altered by a skilled person in the art within the scope of the claims. An embodiment derived from a proper combination of technical means each disclosed in a different embodiment is also encompassed in the technical scope of the present invention.

[Examples]

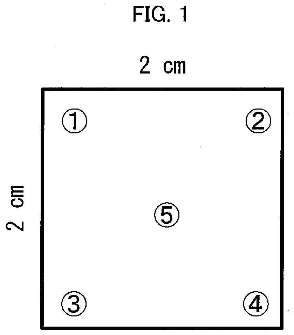

The following will further specifically describe the present invention with reference to Production Examples, Examples, Comparative Examples and Figs. 1 through 9. The present invention is, however, not limited to these.

[Production Examples 1 through 4]

Cathodes for an electrochemical device were prepared with use of the following materials and in accordance with the following method.

<Materials>

Active material: $LiNi_{1/3}Mn_{1/3}Co_{1/3}O_2$ (NMC)
Conductive auxiliary agent: Carbon-based conductive auxiliary agent (Carbon black was used as the carbon-based conductive auxiliary agent.)
Binder: Alg-H
Current collector: Aluminum foil

<Production method>

Alg-H, NMC, and a carbon-based conductive auxiliary agent were put in a mortar and mixed. To a resultant mixture, water was added and kneaded so as to achieve a solid content concentration of approximately 60 wt% to prepare a coating liquid (slurry). The coating liquid obtained was applied onto a current collector (aluminum foil) in accordance with the doctor blade method, allowed to stand still at room temperature, and then heated on a hot plate at 50°C so as to be dried by removal of moisture. Subsequently, the current collector onto which the coating liquid was applied was dried under a depressurization condition of not higher than 10 Pa and at 120°C for several hours. Thus obtained was a mix electrode sheet (electrode for an electrochemical device).

In the method above, electrodes 1 through 4 were prepared with a weight ratio (dry weight ratio) of NMC : the carbon-based conductive auxiliary agent : Alg-H = 91 : 8 : 1 (Production Example 1), 90 : 8 : 2 (Production Example 2), 89 : 8 : 3 (Production Example 3), and 88 : 8 : 4 (Production Example 4), respectively.

[Production Example 5]

First, 5 wt% of a sodium alginate aqueous solution was prepared. An active material and a carbon-based conductive auxiliary agent (carbon black) were put in a mortar and mixed for approximately 10 minutes. Then, to a mixture of NMC and the carbon-based conductive auxiliary agent, a magnesium alginate aqueous solution was added. Here, the active material (NMC), the carbon-based conductive auxiliary agent, and the sodium alginate aqueous solution were mixed so that a resultant mixture had a weight ratio (a ratio of the mixture in the electrode) of NMC : the carbon-based conductive auxiliary agent : Alg-Na = 90 : 8 : 2 after drying. Thus obtained was a coating liquid of slurry. The coating liquid was applied onto a current collector with use of a doctor blade, and was heated on a hot plate at 80°C for approximately 10 minutes. Subsequently, the coating liquid applied on the current collector was dried in an atmosphere of 100°C and under a reduced pressure of $10^{-1}$ Pa for 12 hours to obtain an electrode 5.

[Production Example 6]

An electrode 6 was obtained by a similar method as that of Production Example 5, except that magnesium alginate (Alg-Mg) was used as a binder instead of sodium alginate. In doing so, an active material (NMC), a carbon-based conductive auxiliary agent, and a magnesium alginate aqueous solution were mixed so that a resultant mixture had a weight ratio (a ratio of the mixture in the electrode) of NMC : the carbon-based conductive auxiliary agent : Alg-Mg = 90 : 8 : 2 after drying.

[Production Example 7]

A cathode 6 was obtained by a similar method as that of Production Example 5, except that a mixture of CMC and SBR was used as a binder instead of sodium alginate. In doing so, an active material (NMC), a carbon-based conductive auxiliary agent, and an aqueous solution of CMC and SBR (CMC+SBR) were mixed so that a resultant mixture had a weight ratio (a ratio of the mixture in an electrode) of NMC : the carbon-based conductive auxiliary agent : (CMC+SBR) = 90 : 8 : 2 after drying. A weight ratio of CMC and SBR was CMC : SBR = 1 : 1.

[Production Examples 8 and 9]

Electrodes were obtained by a similar method as those of Production Examples 1 through 4, except that PVdF was used as a binder instead of Alg-H.
In the method, a weight ratio of NMC, the carbon-based conductive auxiliary agent, and PVdF was set to NMC : the carbon-based conductive auxiliary agent : PVdF = 88 : 10 : 2 (Production Example 8) and 85 : 8 : 7 (Production Example 9), respectively, so that Electrodes 8 and 9 were obtained.

[Physical properties test]

The following slurry (dispersion liquids) and the electrodes prepared in the production examples above were used to measure physical properties of the electrodes.

<Evaluation of pH of electrode slurry>

The following five types of slurry were prepared with use of (i) NMC as an electrode active material and (ii) Alg-H, sodium alginate (Alg-Na), magnesium alginate (Alg-Mg), and CMC as binders, and a pH of each slurry was measured.
Slurry 1: Slurry prepared by adding 5.0 g of water to 0.1 g of NMC

Slurry 2: Slurry prepared by adding 0.01 g of Alg-H to 0.1 g of NMC and then adding 5.0 g of water to a resultant mixture

Slurry 3: Slurry prepared by adding 0.01 g of Alg-Na to 0.1 g of NMC and then adding 5.0 g of water to a resultant mixture

Slurry 4: Slurry prepared by adding 0.01 g of Alg-Mg to 0.1 g of NMC and then adding 5.0 g of water to a resultant mixture

Slurry 5: Slurry prepared by adding 0.01 g of CMC to 0.1 g of NMC and then adding 5.0 g of water to a resultant mixture

Results obtained by measuring a pH of each of the slurry 1 through 5 are shown in Table 1 below.

[Table 1]

Table 1 Evaluation of pH of electrode slurry

| Slurry | Active material | Solvent | Binder | pH |
|--------|-----------------|---------|--------|------|
| Slurry 1 | NMC | Water | - | 10.5 |

(continued)

| Slurry | Active material | Solvent | Binder | pH |
|--------|-----------------|---------|--------|------|
| Slurry 2 | NMC | Water | Alg-H | 4.42 |
| Slurry 3 | NMC | Water | Alg-Na | 10.5 |
| Slurry 4 | NMC | Water | Alg-Mg | 10.5 |
| Slurry 5 | NMC | Water | CMC | 10.4 |

As shown in Table 1, the slurry 1 which contains only NMC was highly alkaline. This is because NMC, which is a layered metal oxide, reacted with water. While doing so, NMC is deteriorated due to dissolution of a metal component of NMC into water.

The slurry 3 through 5 respectively containing Alg-Na, Alg-Mg, and CMC, which are neutral binders, were also highly alkaline to a similar extent as slurry 1. This shows that the slurry 1 and 3 through 5 had deterioration of NMC due to a reaction between NMC and water, regardless of whether or not a binder was present.

Meanwhile, in the slurry 2 employing Alg-H, which is an acidic binder, a change of slurry into alkaline was suppressed, so that the slurry 2 had an acidic pH. That is, the use of Alg-H allowed preventing NMC from being deteriorated by a reaction between NMC and water.

<Peel test>

The electrodes 1 to 9 respectively produced in Production Examples 1 through 9 were each subjected to a peel test in accordance with JIS-Z0237.

Results from the peel test are shown in Table 2 below.

[Table 2]

Table 2 Results of test of peeling strength of mix electrode

| Electrode | | Ratio of binder contained | Peeling strength [N/15 mm] |
|-----------|---|---------------------------|----------------------------|
| Electrode 1 | NMC-Alg-H | 1 wt% | 1.6 |
| Electrode 2 | NMC-Alg-H | 2 wt% | 9.6 |
| Electrode 3 | NMC-Alg-H | 3 wt% | 10.6 |
| Electrode 4 | NMC-Alg-H | 4 wt% | 7.5 |
| Electrode 5 | NMC-Alg-Na | 2 wt% | 5.2 |
| Electrode 6 | NMC-Alg-Mg | 2 wt% | 6.5 |
| Electrode 7 | NMC-(CMC+SBR) | 5 wt% | 6.5 |
| Electrode 8 | NMC-PVdF | 2 wt% | 2.0 |
| Electrode 9 | NMC-PVdF | 7 wt% | 7.5 |

Comparison of the electrodes 2, 5, 6, and 8, in each of which a binder is used in an amount of 2 wt%, shows that an electrode employing Alg-H as a binder has strength significantly higher than those of the electrodes employing other binders. Also as compared with the electrodes 7 and 9, each of which employed a binder other than Alg-H in an amount of more than 2 wt%, the electrode employing Alg-H as a binder had peeling strength better than those of the electrodes employing other binders. That is, Alg-H allows improving strength of a mix electrode as compared with a conventional binder, even in a case where Alg-H is used in a very small amount.

Comparison of the measured results of the electrodes 1 through 4, each of which employed Alg-H as a binder, shows that an optimum content of Alg-H in a mix is 2 wt% to 3 wt%. Meanwhile, the electrode 1, in which the binder was used in half an amount of the binder used in the electrode 8, had strength equivalent to, through slightly weaker than, that of the electrode 8. Further, the electrode 4, in which the binder was used in an amount significantly smaller than those of the binders used in the electrode 7 and 9, was also able to ensure strength equivalent to or greater than those of the electrodes 7 and 9.

As is clear from the results shown in Table 2, the binder in accordance with the present invention, in an amount smaller than that of a conventional binder, can be expected to ensure strength equivalent to or greater than strength realized by the conventional binder, in a case where a content rate of the binder in accordance with the present invention is within a range of not less than 1 wt% and not more than 10 wt% in terms of dry weight relative to total 100 wt% of the binder, a conductive auxiliary agent, and an active material in terms of dry weight.

<Evaluation of structural change in electrode>

The electrode 2 prepared in Production Example 2 and the electrode 9 prepared in Production Example 9 were used to evaluate a change in structure of the electrodes. A 2 cm × 2 cm piece was cut out of each of the electrodes 2 and 9, and a thickness of the electrode thus cut out was measured at a center and four corners of the electrode with use of a micrometer. Then, each electrode was immersed in an electrolyte ($LiPF_6$/EC+DMC, EC: ethylene carbonate, DMC: dimethyl carbonate) and was allowed to stand still at 60°C for 1 week. Subsequently, a thickness of each electrode was measured again at the center and the four corners of the electrode with use of the micrometer. Fig. 1 is a view schematically illustrating positions at which a thickness of an electrode is measured. The five points, the center and the four corners, of the electrode to be measured correspond to points 1 through 5 in Fig. 1, respectively.

As a result, it was found that the electrode 2 employing Alg-H as a binder did not have a change in thickness of the electrode (had a thickness increase rate of 0%), whereas the electrode 9 employing PVdF as a binder had a thickness increase rate of 25%.

This result shows that the use of Alg-H suppresses swelling of an electrode, which swelling is observed in a conventional electrode due to a contact between the conventional electrode and an electrolyte. Accordingly, the electrode gains structural stability.

[Example 1]

With use of the electrode 2 prepared in Production Example 2, a two-electrode half-cell for evaluation was prepared. The half-cell had a configuration shown below. Note that a piece with a diameter of 12 mm was punched out of the electrode 2 and used.

(Configuration)

Cathode: Electrode 2 (NMC: the carbon-based conductive auxiliary agent : Alg-H = 90 : 8 : 2)
Electrolyte: 1.0 mol dm$^{-3}$ $LiPF_6$/EC+DMC
Anode: Li foil
Separator: Polyethylene-based
The cathode and the anode above were disposed on both sides, a separator was disposed between these electrodes, and the electrolyte was injected to prepare the two-electrode half-cell.

[Example 2]

A prototype cell was prepared with the same configuration and by the same method as the configuration and the method shown in Example 1, except that a graphite electrode was used as an anode.

[Comparative Example 1]

A two-electrode half-cell for evaluation was prepared with the same configuration and by the same method as the configuration and the method shown in Example 1, except that the electrode 7 (NMC : the carbon-based conductive auxiliary agent : (CMC+SBR) = 90 : 8 : 2) was used as a cathode instead of the electrode 2.

[Comparative Example 2]

A two-electrode half-cell for evaluation was prepared with the same configuration and by the same method as the configuration and the method shown in Example 1, except that the electrode 8 (NMC : the carbon-based conductive auxiliary agent : PVdF = 88 : 10 : 2) was used as a cathode instead of the electrode 2.

[Comparative Example 3]

A prototype cell was prepared with the same configuration and by the same method as the configuration and the method shown in Example 2, except that the electrode 8 (NMC : the carbon-based conductive auxiliary agent : PVdF = 88 : 10 : 2) was used as a cathode instead of the electrode 2.

<Charge-discharge characteristics evaluation 1>

Under the following measurement conditions, measurement of constant current charge and discharge with respect to the two-electrode half-cell for evaluation obtained in Example 1 was carried out to measure a discharge capacity (Discharge capacity / mAh g$^{-1}$) and a charge-discharge efficiency (Coulobmic efficiency / %), so that charge-discharge characteristics were measured.

(Measurement conditions)

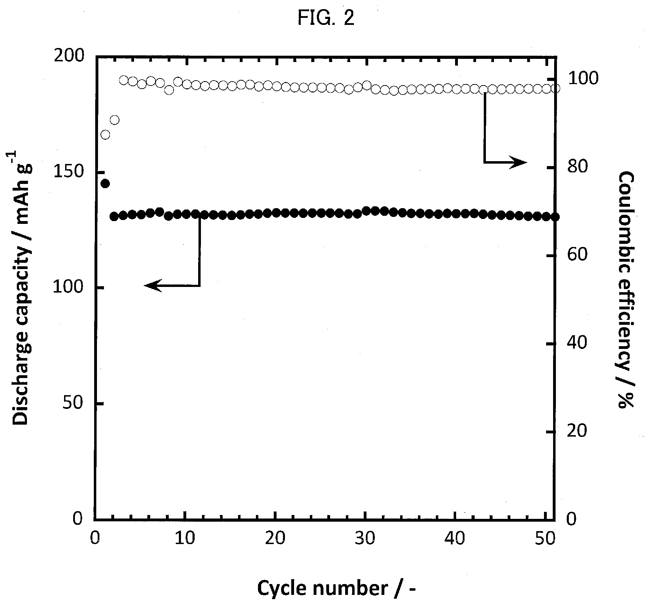

Charge: Constant current-constant voltage (CC-CV mode. In a CV mode, charge is ended at a point in time when an electric current value becomes a tenth of a value of a set current in a CC mode.)
Discharge: Constant current (CC mode)
One-hour rate (1 C rate) = 150 mA/g
Voltage range: 3.0 VvsLi/Li$^+$ to 4.2 VvsLi/Li$^+$
Under these conditions, one cycle of charge and discharge was carried out, both at 0.1 C rate, and then 50 cycles of charge and discharge were carried out, both at 1.0 C rate.
Measured results are shown in Fig. 2. Fig. 2 is a graph showing results obtained by carrying out measurement of constant current charge and discharge with respect to a two-electrode half-cell for evaluation which half-cell employed the electrode in accordance with the present invention for an electrochemical device.
As shown in Fig. 2, 50 cycles of stable charge and discharge were observed, and a charge-discharge efficiency had a high value of 98%. That is, it was found that Alg-H was electrochemically stable as a binder and suppresses deterioration of a structure of NMC.

<Charge-discharge characteristics evaluation 2>

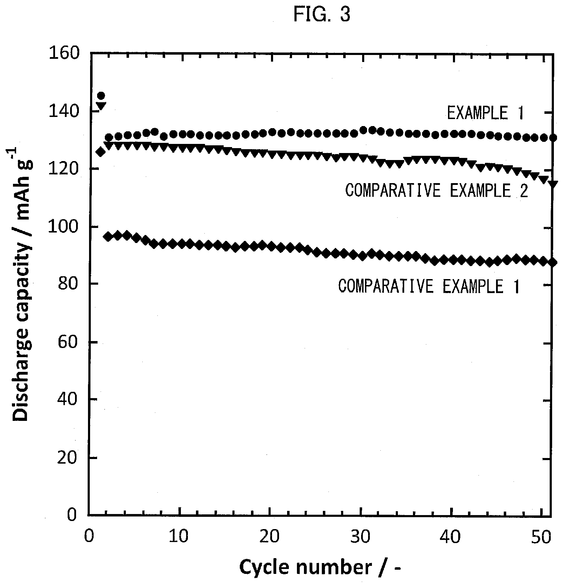

Under the same measurement conditions as those for Charge-discharge characteristics evaluation 1 described above, measurement of constant current charge and discharge was carried out with use of the two-electrode half-cell for evaluation prepared in Example 1, the two-electrode half-cell for evaluation prepared in Comparative Example 1, and the two-electrode half-cell for evaluation prepared in Comparative Example 2 to measure a discharge capacity (Discharge capacity / mAh g$^{-1}$) of each of these two-electrode half-cells, so that comparison was made between charge-discharge characteristics of the respective two-electrode half-cells.
Measured results are shown in Fig. 3. Fig. 3 is a graph showing results obtained by carrying out measurement of constant current charge and discharge with respect to (i) a two-electrode half-cell for evaluation which half-cell employed the electrode in accordance with the present invention for an electrochemical device and (ii) two-electrode half-cells for evaluation each of which half-cells employed a conventional electrode.
As shown in Fig. 3, the electrodes employing conventional binders ((CMC+SBR), PVdF) were each affected by deterioration of the active material caused by a reaction between the active material and water at the time of preparation of the electrode. Accordingly, a significant decrease in discharge capacity (Comparative Example 1) and a decrease in discharge capacity due to, for example, elution of an element from the active material (Comparative Example 2) were observed. Meanwhile, in a case of using an Alg-H binder (Example 1), the active material was not deteriorated, and stable charge and discharge was possible.

<Output characteristics evaluation 1>

Under the following conditions, a discharge capacity (Discharge capacity / mAh g$^{-1}$) of each of the two-electrode half-cell for evaluation obtained in Example 1 and the two-electrode half-cell for evaluation obtained in Comparative Example 2 was measured at 1.0 C to 5.0 C so as to evaluate output characteristics.

(Measurement conditions)

Charge: Constant current-constant voltage (CC-CV mode. In a CV mode, charge is ended at a point in time when an electric current value becomes a tenth of a value of a set current in a CC mode.)

Discharge: Constant current (CC mode)
One-hour rate (1 C rate) = 150 mA/g
Voltage range: 3.0 VvsLi/Li$^+$ to 4.5 VvsLi/Li$^+$
Under these conditions, one cycle of charge and discharge was carried out, both at 0.1 C rate. Then a charge rate and a discharge rate were set to 1.0 C, 2.0 C, 3.0 C, 4.0 C, and 5.0 C, and a discharge capacity was measured. Note that at each rate, 5 cycles of charge and discharge were carried out.

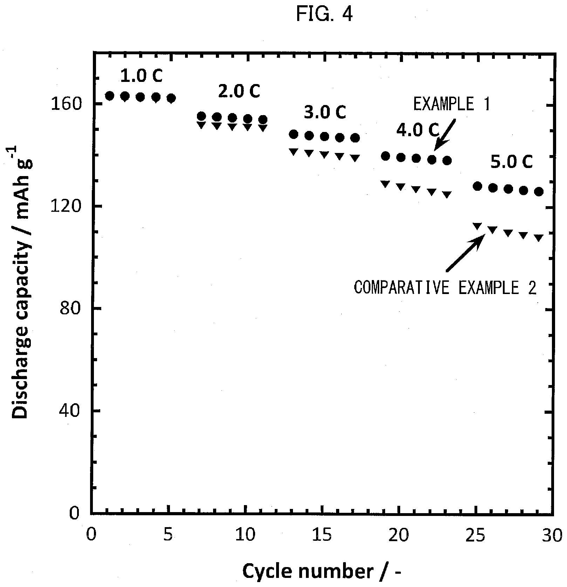

Measured results are shown in Fig. 4. Fig. 4 is a graph showing results obtained by measuring an output characteristic with respect to (i) a two-electrode half-cell for evaluation which half-cell employed the electrode in accordance with the present invention for an electrochemical device and (ii) two-electrode half-cells for evaluation each of which half-cells employed a conventional electrode.

As shown in Fig. 4, no difference was observed between the two-electrode half-cells (Example 1 and Comparative Example 2) at a low current density (1.0 C), but discharge capacities of the respective two-electrode half-cells became more different from each other as the current density increased. This result shows that the use of Alg-H as a binder enables an improvement in output of a cathode employing NMC.

<Charge-discharge characteristics evaluation 3>

Under the following measurement conditions, measurement of constant current charge and discharge was carried out with use of the prototype cell prepared in Example 2 so as to measure a discharge capacity (Discharge capacity / mAh g$^{-1}$) and a charge-discharge efficiency (Coulobmic efficiency / %), so that charge-discharge characteristics were measured.

(Measurement conditions)

Charge: Constant current-constant voltage (CC-CV mode. In a CV mode, charge is ended at a point in time when an electric current value becomes a tenth of a value of a set current in a CC mode.)
Discharge: Constant current (CC mode)
One-hour rate (1 C rate) = 150 mA/g
Voltage range: 3.0 VvsLi/Li$^+$ to 4.2 VvsLi/Li$^+$
Under these conditions, one cycle of charge and discharge was carried out, both at 0.1 C rate. Then, 50 cycles of charge and discharge were carried out, both at 1.0 C rate.

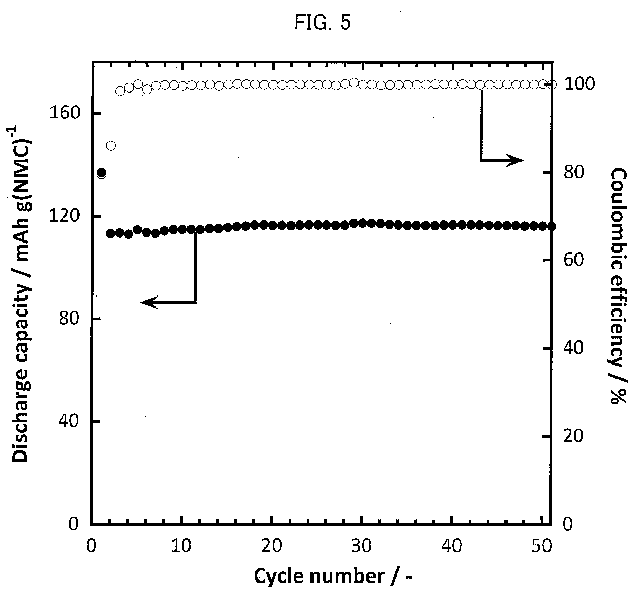

Measured results are shown in Fig. 5. Fig. 5 is a graph showing results obtained by carrying out measurement of constant current charge and discharge with respect to a prototype cell which employed the electrode in accordance with the present invention for an electrochemical device.

As shown in Fig. 5, 50 cycles of stable charge and discharge were observed. This shows that an electrode employing an Alg-H binder enables stable charge and discharge also in a prototype cell.

<Charge-discharge characteristics evaluation 4>

Under the same conditions as and with use of a prototype cell having the same configuration as the conditions and the configuration in the case of <Charge-discharge characteristics evaluation 3> above, except that 1400 cycles of charge and discharge were carried out, measurement of constant current charge and discharge was carried out so as to measure a discharge capacity (Discharge capacity / mAh g$^{-1}$) and a charge-discharge efficiency (Coulobmic efficiency / %), so that charge-discharge characteristics were measured.

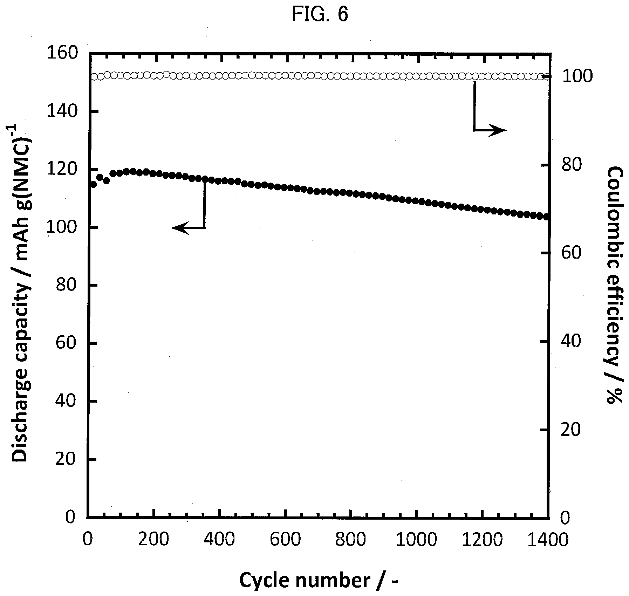

Measured results are shown in Fig. 6. Fig. 6 is a graph showing results obtained by carrying out, over a long period, measurement of constant current charge and discharge with respect to a prototype cell which employed the electrode in accordance with the present invention for an electrochemical device.

As shown in Fig. 6, an electrode employing an Alg-H binder enables stable charge and discharge even in a case where 1400 cycles of charge and discharge were carried out over a long period.

<Charge-discharge characteristics evaluation 5>

Under the same conditions as and with use of a prototype cell having the same configuration as the conditions and the configuration in the case of <Charge-discharge characteristics evaluation 3> above, except that an upper limit of an operating voltage was set to 4.5 VvsLi/Li$^+$ (that is, a voltage range was set to 3.0 VvsLi/Li$^+$ to 4.5 VvsLi/Li$^+$), measurement of constant current charge and discharge was carried out so as to measure a discharge capacity (Discharge capacity / mAh g$^{-1}$) and a charge-discharge efficiency (Coulobmic efficiency / %), so that charge-discharge characteristics were measured.

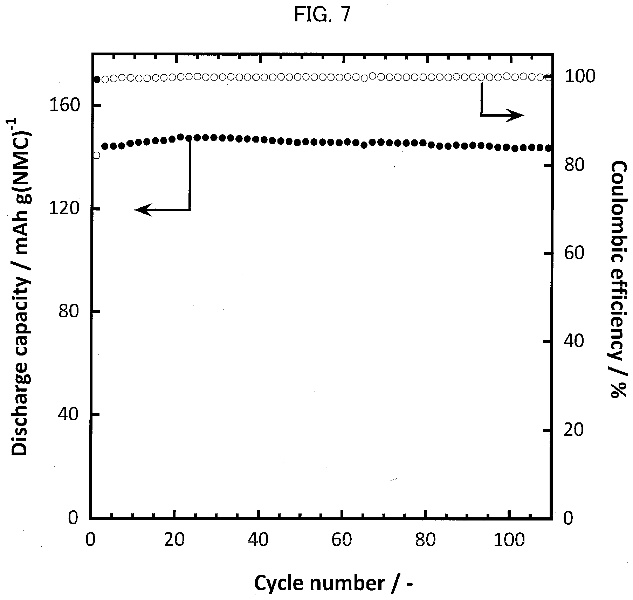

Measured results are shown in Fig. 7. Fig. 7 is a graph showing results obtained by carrying out, at a high voltage, measurement of constant current charge and discharge with respect to a prototype cell which employed the electrode in accordance with the present invention for an electrochemical device.

As shown in Fig. 7, an electrode employing an Alg-H binder enables stable charge and discharge even at a relatively high voltage of 4.5 V.

<Output characteristics evaluation 2>

Under the following conditions, a discharge capacity (Discharge capacity / mAh $g^{-1}$) of each of the prototype cell obtained in Example 2 and the prototype cell obtained in Comparative Example 3 were measured at 1.0 C to 6.0 C carry out so as to evaluate output characteristics.

(Measurement conditions)

Charge: Constant current-constant voltage (CC-CV mode. In a CV mode, charge is ended at a point in time when an electric current value becomes a tenth of a value of a set current in a CC mode.)
Discharge: Constant current (CC mode)
One-hour rate (1 C rate) = 150 mA/g
Voltage range: 3.0 VvsLi/Li$^+$ to 4.5 VvsLi/Li$^+$
Under these conditions, one cycle of charge and discharge was carried out, both at 0.1 C rate. Then a charge rate and a discharge rate were set to 1.0 C, 2.0 C, 3.0 C, 4.0 C, 5.0 C, and 6.0 C, and a discharge capacity was measured.

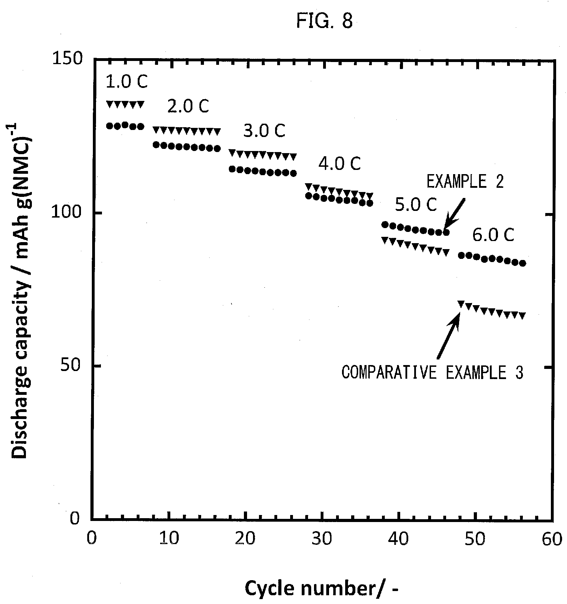

Measured results are shown in Fig. 8. Fig. 8 is a graph showing results obtained by measuring an output characteristic with respect to (i) a prototype cell which employed the electrode in accordance with the present invention for an electrochemical device and (ii) a prototype cell which employed a conventional electrode.

As shown in Fig. 8, a clear difference was observed between the discharge capacities of the respective prototype cells in a case of a high current density (5.0 C and 6.0 C). The prototype cell prepared in Example 2 had a discharge capacity significantly greater than that of the prototype cell prepared in Comparative Example 2. This, as with the evaluation (see the descriptions in <Output characteristics evaluation 1>) made with respect to the half-cells, shows that the use of Alg-H as a binder improves output characteristics. Further, it was also confirmed that stable operation was achieved at the time of high output, since an upper limit of an operating voltage was 4.5 V in the evaluation with respect to the half-cells.

[Example 3]

[Preparation of two-electrode half-cell for evaluation]

A cathode for an electrochemical device was prepared with use of the following materials and method.

<Materials>

Active material: $LiNi_{0.5}Mn_{1.5}O_2$ (LNM)
Conductive auxiliary agent: Carbon black
Binder: Binder obtained by adding chitosan to 3 wt% of an acetic acid aqueous solution so as to achieve a concentration of 4 wt%
Current collector: Aluminum foil

<Production method>

LMN, carbon black, and the binder were put in a mortar and mixed so as to achieve a weight ratio of LNM: the carbon black : the binder = 89 : 8 : 3. To a resultant mixture, water was added and kneaded so as to achieve a solid content concentration of approximately 60 wt% to prepare a coating liquid (slurry). The coating liquid obtained was applied onto a current collector (aluminum foil) in accordance with the doctor blade method, allowed to stand still at room temperature, and then heated on a hot plate at 50°C so as to be dried by removal of moisture. Subsequently, the current collector onto which the coating liquid was applied was dried under a depressurization condition of not higher than 10 Pa and at 120°C for several hours. Thus obtained was a mix electrode sheet (electrode for an electrochemical device).

A piece with a diameter of 12 mm was punched out of the obtained mix electrode sheet (electrode for an electrochemical device) and used as a cathode, and 1.0 mol dm$^{-3}$ LiPF$_6$/EC+DMC, a Li foil, and a polyethylene-based separator were used as an electrolyte, an anode, and a separator, respectively, to prepare a two-electrode half-cell for evaluation. Specifically, the cathode and the anode above were disposed on both sides, the separator was disposed between these electrodes, and the electrolyte was injected to prepare the two-electrode half-cell.

[Charge and discharge test]

Under the following measurement conditions, a charge and discharge test of the two-electrode half-cell prepared in Example 3 was carried out so as to measure a voltage and a capacity (Capacity / mAh g$^{-1}$).

(Measurement conditions)

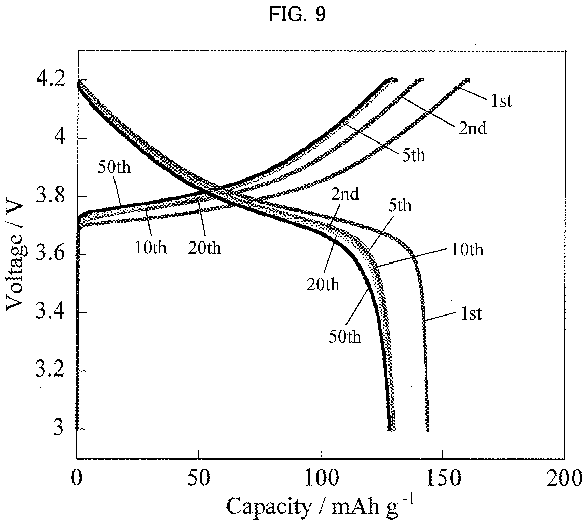

Charge: Constant current-constant voltage (CC-CV mode. In a CV mode, charge is ended at a point in time when an electric current value becomes a tenth of a value of a set current in a CC mode.)
Discharge: Constant current (CC mode)
One-hour rate (1 C rate) = 150 mA/g
Voltage range: 3.0 VvsLi/Li$^+$ to 4.85 VvsLi/Li$^+$
Under these conditions, one cycle of charge and discharge was carried out, both at 0.1 C rate, and then 50 cycles of charge and discharge were carried out, both at 1.0 C rate.
Results of the charge and discharge test are shown in Fig. 9. As shown in Fig. 9, the two-electrode half-cell prepared in Example 3 was capable of stable charge and discharge after 50 cycles, and did not suffer deterioration of the active material in the electrode caused by charge and discharge.
These measurement results show that, also in a case where chitosan containing no proton (H$^+$) in itself was used as a material of the binder, having chitosan coexist with an acid (acetic acid) so that a proton exists in a system (inside the binder) makes it possible to suppress deterioration of the electrode active material caused by charge and discharge. In other words, the use of a binder containing a proton in a system (inside the binder) allows suppressing deterioration of an electrode active material caused by charge and discharge.

Industrial Applicability

The present invention relates to a binder which serves as a material of an electrochemical device, and is applicable to the condenser industry, the car industry, the battery industry, the household electric appliance industry, and the like.

**Claims**

1. An electrode for an electrochemical device, comprising a binder which binds an active material and a conductive auxiliary agent to each other, each of the active material and the conductive auxiliary agent being a material of the electrode for an electrochemical device, the binder comprising: alginic acid (Alg-H) as a main component; and a proton in a system of the binder,
wherein a content rate of the binder is not less than 1 wt% and not more than 10 wt% in terms of dry weight, relative to total 100 wt% of the active material, the conductive auxiliary agent, and the binder in terms of dry weight, and wherein alginic acid (Alg-H) refers to alginic acid in which a carbonyl group is not bound to a cation other than a proton.

2. A slurry for an electrode, comprising:

a binder which binds an active material and a conductive auxiliary agent to each other, each of the active material and the conductive auxiliary agent being a material of an electrode for an electrochemical device, the binder comprising: alginic acid (Alg-H) as a main component; and a proton in a system of the binder;
a conductive auxiliary agent;
an active material; and
water,

wherein the slurry has a solid content concentration of 20 wt% to 75 wt%,
wherein a content rate of the binder is not less than 1 wt% and not more than 10 wt% in terms of dry weight, relative to total 100 wt% of the active material, the conductive auxiliary agent, and the binder in terms of dry weight, and wherein alginic acid (Alg-H) refers to alginic acid in which a carbonyl group is not bound to a cation other than a proton.

3. An electrochemical device comprising:

a cathode;
an anode; and
an electrolyte between the cathode and the anode,

at least the cathode being an electrode recited in claim 1.

**4.** The electrochemical device as set forth in claim 3, wherein the electrochemical device is a lithium-ion secondary battery.

**5.** A method for producing an electrode recited in claim 1, comprising:

a step A of mixing a binder with an active material and a conductive auxiliary agent, each of which is a material for the electrode, to obtain a mixture, the binder binding the active material and the conductive auxiliary agent to each other and comprising: alginic acid (Alg-H) as a main component; and a proton in a system of the binder; and
a step B of mixing the mixture with water to obtain slurry for the electrode,

wherein the slurry has a solid content concentration of 20 wt% to 75 wt% and wherein a content rate of the binder in the slurry is not less than 1 wt% and not more than 10 wt% in terms of dry weight, relative to total 100 wt% of the active material, the conductive auxiliary agent, and the binder in terms of dry weight,
wherein alginic acid (Alg-H) refers to alginic acid in which a carbonyl group is not bound to a cation other than a proton.

**Patentansprüche**

**1.** Elektrode für eine elektrochemische Vorrichtung, aufweisend: ein Bindemittel, das ein aktives Material und einen leitfähigen Hilfsstoff aneinander bindet, wobei jedes von dem aktiven Material und dem leitfähigen Hilfsstoff ein Material der Elektrode für eine elektrochemische Vorrichtung ist, wobei das Bindemittel aufweist: Alginsäure (Alg-H) als eine Hauptkomponente; und ein Proton in einem System des Bindemittels,
wobei der Gehalt an dem Bindemittel nicht weniger als 1 Gew.-% und nicht mehr als 10 Gew.-% Trockengewicht bezogen auf insgesamt 100 Gew.-% Trockengewicht an dem aktiven Material, dem leitfähigen Hilfsstoff und dem Bindemittel beträgt, und
wobei Alginsäure (Alg-H) Alginsäure bezeichnet, bei der eine Carbonylgruppe nicht an ein von einem Proton verschiedenes Kation gebunden ist.

**2.** Aufschlämmung für eine Elektrode, aufweisend:

ein Bindemittel, das ein aktives Material und einen leitfähigen Hilfsstoff aneinander bindet, wobei jedes von dem aktiven Material und dem leitfähigen Hilfsstoff ein Material einer Elektrode für eine elektrochemische Vorrichtung ist, wobei das Bindemittel aufweist: Alginsäure (Alg-H) als eine Hauptkomponente; und ein Proton in einem System des Bindemittels,
einen leitfähigen Hilfsstoff;
ein aktives Material; und
Wasser,

wobei die Aufschlämmung eine Konzentration des Feststoffgehalts von 20 Gew.-% bis 75 Gew.-% aufweist,
wobei der Gehalt an dem Bindemittel nicht weniger als 1 Gew.-% und nicht mehr als 10 Gew.-% Trockengewicht bezogen auf insgesamt 100 Gew.-% Trockengewicht an dem aktiven Material, dem leitfähigen Hilfsstoff und dem Bindemittel beträgt, und
wobei Alginsäure (Alg-H) Alginsäure bezeichnet, bei der eine Carbonylgruppe nicht an ein von einem Proton verschiedenes Kation gebunden ist.

**3.** Elektrochemische Vorrichtung, aufweisend:

eine Kathode;
eine Anode; und
einen Elektrolyten zwischen der Kathode und der Anode,

wobei wenigstens die Kathode eine Elektrode gemäß Anspruch 1 ist.

**4.** Elektrochemische Vorrichtung gemäß Anspruch 3, wobei die elektrochemische Vorrichtung eine Lithiumionen-Sekundärbatterie ist.

**5.** Verfahren zur Herstellung einer Elektrode gemäß Anspruch 1, aufweisend:

einen Schritt A des Mischens eines Bindemittels mit einem aktiven Material und einem leitfähigen Hilfsstoff, die jeweils ein Material für die Elektrode sind, um ein Gemisch zu erhalten, wobei das Bindemittel das aktive Material und den leitfähigen Hilfsstoff aneinander bindet und aufweist: Alginsäure (Alg-H) als eine Hauptkomponente; und ein Proton in einem System des Bindemittels; und

einen Schritt B des Mischens des Gemischs mit Wasser, um eine Aufschlämmung für die Elektrode zu erhalten, wobei die Aufschlämmung eine Konzentration des Feststoffgehalts von 20 Gew.-% bis 75 Gew.-% aufweist und wobei der Gehalt an dem Bindemittel in der Aufschlämmung nicht weniger als 1 Gew.-% und nicht mehr als 10 Gew.-% Trockengewicht bezogen auf insgesamt 100 Gew.-% Trockengewicht an dem aktiven Material, dem leitfähigen Hilfsstoff und dem Bindemittel beträgt,

wobei Alginsäure (Alg-H) Alginsäure bezeichnet, bei der eine Carbonylgruppe nicht an ein von einem Proton verschiedenes Kation gebunden ist.

## Revendications

**1.** Électrode pour un dispositif électrochimique, comprenant un liant qui lie un matériau actif et un agent auxiliaire conducteur l'un à l'autre, chacun du matériau actif et de l'agent auxiliaire conducteur étant un matériau de l'électrode pour un dispositif électrochimique, le liant comprenant : de l'acide alginique (Alg-H) en tant que composant principal ; et un proton dans un système du liant,

dans laquelle une teneur du liant n'est pas inférieure à 1 % en poids et pas supérieure à 10 % en poids en termes de poids sec, par rapport à un total de 100 % en poids du matériau actif, de l'agent auxiliaire conducteur et du liant en termes de poids sec, et

dans laquelle l'acide alginique (Alg-H) désigne un acide alginique dans lequel un groupe carbonyle n'est pas lié à un cation autre qu'un proton.

**2.** Suspension concentrée pour une électrode, comprenant :

un liant qui lie un matériau actif et un agent auxiliaire conducteur l'un à l'autre, chacun du matériau actif et de l'agent auxiliaire conducteur étant un matériau d'une électrode pour un dispositif électrochimique, le liant comprenant : de l'acide alginique (Alg-H) en tant que composant principal ; et un proton dans un système du liant ; un agent auxiliaire conducteur ; un matériau actif ; et de l'eau,

la suspension concentrée ayant une teneur en matières solides de 20 % en poids à 75 % en poids, dans laquelle une teneur du liant n'est pas inférieure à 1 % en poids et pas supérieure à 10 % en poids en termes de poids sec, par rapport à un total de 100 % en poids du matériau actif, de l'agent auxiliaire conducteur et du liant en termes de poids sec, et

dans laquelle l'acide alginique (Alg-H) désigne un acide alginique dans lequel un groupe carbonyle n'est pas lié à un cation autre qu'un proton.

**3.** Dispositif électrochimique comprenant :

une cathode ;
une anode ; et
un électrolyte entre la cathode et l'anode, au moins la cathode étant une électrode selon la revendication 1.

**4.** Dispositif électrochimique selon la revendication 3, le dispositif électrochimique étant une batterie rechargeable au lithium-ion.

**5.** Procédé de production d'une électrode selon la revendication 1, comprenant :

une étape A de mélange d'un liant avec un matériau actif et un agent auxiliaire conducteur, dont chacun est un matériau pour l'électrode, pour obtenir un mélange, le liant liant le matériau actif et l'agent auxiliaire conducteur l'un à l'autre et comprenant : de l'acide alginique (Alg-H) en tant que composant principal ; et un proton dans un système du liant ; et
une étape B de mélange du mélange avec de l'eau pour obtenir une suspension concentrée pour l'électrode, dans lequel la suspension concentrée a une teneur en matières solides de 20 % en poids à 75 % en poids et dans lequel une teneur du liant dans la suspension concentrée n'est pas inférieure à 1 % en poids et pas supérieure à 10 % en poids en termes de poids sec, par rapport à un total de 100 % en poids du matériau actif, de l'agent auxiliaire conducteur et du liant en termes de poids sec,

dans lequel l'acide alginique (Alg-H) désigne un acide alginique dans lequel un groupe carbonyle n'est pas lié à un cation autre qu'un proton.

FIG. 1

2 cm

2 cm

FIG. 2

FIG. 3

FIG. 4

FIG. 5

FIG. 6

FIG. 7

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011140150 A1
- JP 310775 A
- JP 3968771 B
- JP 4329169 B
- JP 4244041 B
- JP 3449679 B
- JP 3958781 B
- JP 3356021 B
- JP 7326357 A
- JP 3619711 B
- JP 3619870 B
- JP 3668579 B
- JP 2013161832 A
- JP 5284896 B

**Non-patent literature cited in the description**

- **I. KOVALENKO et al.** *Science,* 2011, vol. 75, 75-79
- **M. YAMAGATA et al.** *RSC Advances,* 2013, vol. 3, 1037-1040